(19) Europäisches Patentamt / European Patent Office / Office européen des brevets

(11) **EP 3 583 401 B1**

(12) **EUROPEAN PATENT SPECIFICATION**

(45) Date of publication and mention of the grant of the patent:
**31.08.2022 Bulletin 2022/35**

(21) Application number: **18708601.2**

(22) Date of filing: **14.02.2018**

(51) International Patent Classification (IPC):
**G01N 15/02** *(2006.01)*    **G01N 15/14** *(2006.01)*

(52) Cooperative Patent Classification (CPC):
**G01N 15/0205; G01N 15/1459;** G01N 2015/0238;
G01N 2015/0294; G01N 2015/1493;
G01N 2015/1497

(86) International application number:
**PCT/EP2018/053718**

(87) International publication number:
**WO 2018/149889 (23.08.2018 Gazette 2018/34)**

(54) **PARTICLE CHARACTERIZATION APPARATUSES AND METHODS**

PARTIKELCHARAKTERISIERUNGSVORRICHTUNGEN UND -VERFAHREN

APPAREILS ET PROCÉDÉS DE CARACTÉRISATION DE PARTICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2017 PCT/CN2017/000178**
**20.04.2017 EP 17167228**

(43) Date of publication of application:
**25.12.2019 Bulletin 2019/52**

(73) Proprietor: **Koninklijke Philips N.V.**
**5656 AG Eindhoven (NL)**

(72) Inventors:
• **ZHANG, Qiushi**
  **5656 AE Eindhoven (NL)**
• **CHEN, Shuang**
  **5656 AE Eindhoven (NL)**

(74) Representative: **Philips Intellectual Property & Standards**
**High Tech Campus 52**
**5656 AG Eindhoven (NL)**

(56) References cited:
**US-A- 5 561 515    US-A1- 2009 039 249**

• SU Y ET AL: "DEVELOPMENT AND CHARACTERIZATION OF AN AEROSOL TIME-OF-FLIGHT MASS SPECTROMETER WITH INCREASED DETECTION EFFICIENCY", ANALYTICAL CHEMISTRY, AMERICAN CHEMICAL SOCIETY, vol. 76, no. 3, 30 December 2003 (2003-12-30), pages 712-719, XP001047320, ISSN: 0003-2700, DOI: 10.1021/AC034797Z

• EBEN S. CROSS ET AL: "Laboratory and Ambient Particle Density Determinations using Light Scattering in Conjunction with Aerosol Mass Spectrometry", AEROSOL SCIENCE AND TECHNOLOGY, vol. 41, no. 4, 5 March 2007 (2007-03-05), pages 343-359, XP055170853, ISSN: 0278-6826, DOI: 10.1080/02786820701199736 cited in the application

• D.M MURPHY ET AL: "Particle density inferred from simultaneous optical and aerodynamic diameters sorted by composition", JOURNAL OF AEROSOL SCIENCE, vol. 35, no. 1, 26 August 2003 (2003-08-26), pages 135-139, XP055424218, AMSTERDAM, NL ISSN: 0021-8502, DOI: 10.1016/S0021-8502(03)00386-0

**Description**

FIELD OF THE INVENTION

This invention relates to apparatuses and methods for characterizing particles.

BACKGROUND OF THE INVENTION

It is well known that it is desirable to monitor pollution levels, such as particulate pollutants. Various sensing devices are known, which for example provide a particle concentration level for particles below a certain size. Optical particle sensing approaches are for example known based on optical scattering.

It is also of interest to know the particle size or particle size distribution of a pollutant for example to identify the pollutant and hence the cause or source of the pollution.

Various particle sizing techniques are known. These techniques aim to measure a particle equivalent diameter, and there are different definitions for this equivalent diameter. For example, a particle effective optical diameter ($d_{op}$) is an equivalent diameter reported from a Mie light scattering measurement technique. A particle effective aerodynamic diameter ($d_{ae}$) is the equivalent diameter of a spherical particle with standard density which settles at the same terminal velocity as the particle of interest.

There is a difference between the two diameters, which results from the shape (e.g. spherical vs. non-spherical) and density (as compared to a standard density of $1g/cm^3$) of the particle.

It would be of interest to obtain additional information about the particle characteristics other than a simple equivalent diameter. For example, efforts have been made to measure a sub-micron particle shape factor and density in scientific application scenarios. Typically, two or more equivalent particle diameters are measured by corresponding measurement techniques connected in series along a gas flow. These cumbersome instruments usually require a large space to set up and they require skilled operators.

The article "Laboratory and Ambient Particle Density Determinations using Light Scattering in Conjunction with Aerosol Mass Spectrometry" of Eben S. Cross et. al. in Aerosol Science and Technology, vol. 41. No. 4, 5 March 20007 pages 343-359 discloses a mass spectrometer with an optical stage for determining a vacuum aerodynamic diameter from a time of flight measurement and a particle optical diameter from a scattered light intensity measurement.

US 2009/09249 discloses a system for estimating size segregated aerosol mass concentration. It combines scattered light intensity measurement and time of flight measurement as a particle traverses an interrogation beam. It discloses that from the pulse height of the scattered light intensity signal and the time of flight signal, the optical and aerodynamic particle size distributions may be inferred.

WO 2016/198866 discloses determining a particle size and a particle shape from a scattered light intensity measurement.

There remains a need for an analysis system which enables more information about particles to be obtained than a simple diameter measurement, but with a low cost and compact arrangement.

SUMMARY OF THE INVENTION

The invention is defined by the claims.

There is provided an apparatus for determining particle characteristics according to claim 1 or 2.

This apparatus enables multiple parameters to be obtained about detected particles using a single optical analysis system. In particular, both effective optical and aerodynamic diameters are obtained, as well as further shape and density information. This is possible by making use of a relatively long measurement zone so that particle transit time information is obtained as an additional variable to the light intensity. The use of an accelerating flow contributes to the difference in transit time (i.e. the time the particles are resident in the measurement zone) for particles with different aerodynamic diameters, hence enables particle sizing.

The measurement zone length may be between 1cm and 6cm.

The additional information may be used to determine particle type and composition.

The light source is preferably a laser.

In the apparatus according to claim 1, the variation of the peak intensity may be caused by rotation of a non-spherical particle during the scattering measurement. By measuring the level of signal variation, a measure is obtained relating to the level of uniformity of the particle shape.

In the apparatus according to claim 2, the apparatus comprises:

a first polarizer between the light source and the measurement zone; and
a second polarizer between the measurement zone and the light detector, wherein the second polarizer has a first portion with a matching polarization to the first polarizer and a second portion with an orthogonal polarization to the first polarizer.

In this way, it becomes possible to determine the proportion of light which has undergone a polarization shift compared to light that has not undergone a polarization shift, and hence to differentiate between scattering amplitudes in the Mie scattering S-matrix, which in turn depends on the particle shape.

The apparatus may further comprise:

an outer enclosure;
a fan connected to the outlet;
a filter arrangement coupled to a further pair of inlets; and
a flow deflector arrangement for controlling the flow from the filter arrangement and for controlling the flow path.

The filter arrangement is used to control the flow. For example, by suitable design of the filter arrangement the flow along the flow path may be controlled to introduce a single particle at a time into the measurement zone. This for example involves diluting the particle concentration introduced from the inlet by streams of clean air from the filter arrangement.

The filter arrangement may comprise first and second filters on opposite sides of the flow path, and the flow deflector arrangement comprises corresponding first and second flow deflectors.

The apparatus may be adapted to provide a uniform acceleration of the flow along the flow path within the measurement zone.

In accordance with another aspect of the invention , there is provided a method according to claim 6 or 7.

This method makes use of a prolonged intensity measurement so that both time duration and intensity become significant, and this provides two measurements from a single optical analysis stage. An accelerating flow field ensures that particles of different aerodynamic sizes have different transit times in the measurement zone. This in turn enables more information than just a particle diameter to be derived.

The method maybe used to differentiate between different types of pollen, e.g. in an allergy detection device. The particles described in this disclosure may be pollen. The different particle characteristics may be used to differentiate between different types of pollen.

A filtered air flow may be provided towards the measurement zone thereby to control the flow path. This may be performed to focus the flow path, to generate the desired accelerating flow field and to dilute the particle number concentration in the flow from the inlet to ensure that a single particle passes the measurement zone at a time. A uniform acceleration of the flow along the flow path may for example be provided within the measurement zone.

The invention may be implemented at least in part in software.

BRIEF DESCRIPTION OF THE DRAWINGS

Examples of the invention will now be described in detail with reference to the accompanying drawings, in which:

Figure 1 shows a first possible way to obtain information relating to particles in addition to the particle diameter, which is not part of the present invention;
Figure 2 shows a second possible way to obtain information relating to particles in addition to the particle diameter, which is not part of the present invention;
Figure 3 shows a first example of a particle size determining apparatus and shows the parts relating to the optical system;
Figure 4 shows an example of the collected light intensity signal;
Figure 5 shows the parts of the apparatus relating to flow control;
Figure 6 shows the flow paths within the apparatus;
Figure 7 shows the velocity profile within the measurement zone;
Figure 8 shows the effect of particle density and hence the particle aerodynamic diameter on the velocity reached in the accelerating flow field;
Figure 9 shows the terminal velocity versus the particle diameter.
Figure 10 shows the sensitivity of the terminal velocity versus the particle diameter.
Figure 11 shows the pulse width versus the particle diameter.
Figure 12 shows the sensitivity of the pulse width versus the particle diameter;
Figure 13 shows a collected signal for a non-spherical particle;
Figure 14 shows a collected signal for a spherical particle;
Figure 15 shows an apparatus which uses polarization to enable determination of a shape parameter;

Figure 16 shows an example of the collected light intensity for a non-spherical particle using the apparatus of Figure 15;

Figure 17 shows parameters associated with the optical arrangement of Figure 3 and shows how decreasing the angle of incidence $\theta_{inc}$ can increase irradiance while maintaining the length of the measurement zone L; and

Figure 18 shows a method of determining particle characteristics.

## DETAILED DESCRIPTION OF THE EMBODIMENTS

The invention provides an apparatus for determining particle characteristics, in which a flow path is generated containing particles to be analyzed, in which an accelerating flow is provided. A light detection system detects light received from a measurement zone which has been scattered by the particles. A time duration for which a particle remains in the measurement zone is measured to determine an effective aerodynamic particle diameter and a peak detected received light intensity is measured to determine an effective optical particle diameter. Further particle parameters are also obtained relating to the shape and density of the particle.

This approach enables more information than only a particle size to be obtained using a single-stage optical analysis system. The additional information may be used to characterize the particles more accurately.

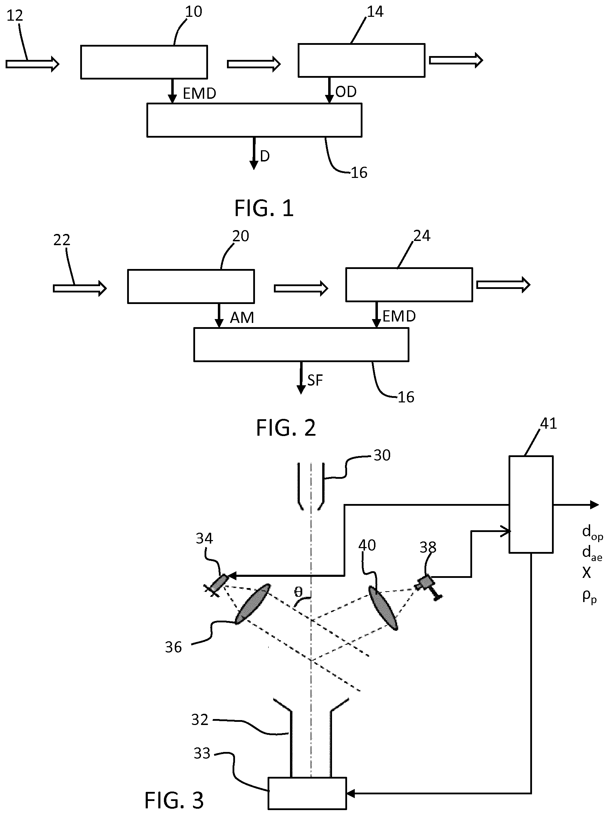

Figures 1 and 2 show examples of possible configurations for obtaining information additional to an equivalent diameter measurement, which are not part of the present invention.

Figure 1 shows how multiple measurements may be used in sequence to obtain a particle density measurement.

The system comprises a differential mobility analyzer 10 to which a sample flow 12 is provided. This provides an electrical mobility diameter EMD as its output. The flow passes to an optical particle counter 14 which provides an optical diameter OD as its output. The two outputs are processed by processor 16 which provides a density measurement D.

Figure 2 shows how multiple measurements may be used in sequence to obtain a shape factor (which is an indication of how far the shape deviates from a perfect sphere).

The system comprises an aerosol particle mass analyzer 20 to which a sample flow 22 is provided. This provides an aerosol mass AM as its output. The flow passes to a scanning mobility particle sizer 24 which provides an electrical mobility diameter EMD as its output. The two outputs are processed by processor 26 which provides a shape factor measurement SF.

A scanning mobility particle sizer essentially performs the same function as a differential mobility analyzer but it can also select particles with multiple electrical mobility values by changing the electric field intensity.

These approaches thus require complicated apparatus in order to enhance the basic measurement of effective diameter.

The invention is instead based on the use of a single optical stage with a wide light source beam such as a laser beam to measure particle effective optical diameter (based on the intensity of a pulse received by the photon detector) and particle transit time (based on the width of the pulse) in a steady state accelerating flow field. By steady state is meant that the flow conditions are temporally constant, i.e. the flow has the constant velocity (and acceleration) at different points along the flow path over time.

The wide light source beam defines a measurement zone. In particular, the envelope the light source beam determines the length of the measurement zone. This means that the transit time through the measurement zone can be determined based on analysis of reflected light, and does not require any additional timing measurements.

Thus, separate components are not needed for a time of flight measurement. Only an incident beam, for example generated by a laser diode and beam shaping optics, is needed.

A pre-defined relationship may be used to convert the transit time to an effective aerodynamic diameter. The transit time is more easy to measure as it related directly to the signal width. The effective aerodynamic and optical diameters are then processed to yield additional information about the particle, the particle density, shape factor, and optionally type and composition.

By way of example, a laser beam with width 4 cm is wide enough to identify differences in particle terminal velocity and flight time induced by differences in particle effective aerodynamic diameter, and hence particle density and composition. More generally, the measurement zone has a length more than 1cm, for example a spatial length in the range 1cm to 6cm. The larger the length, the greater the sensitivity, so there is a trade-off between sensitivity and sensor size.

This additional information can thus be obtained without requiring multiple sensing instruments and enables portable sensors to obtain particle size, type and composition with reasonable accuracy in a quick and cost-effective manner.

The invention combines optical sensing with flow control.

Figure 3 shows the optical sensing features.

The optical apparatus comprises an inlet 30 which connects to the particle source. A flow path is defined to an outlet 32 which is connected to a negative pressure source 33 such as a fan, to control the flow.

A laser diode 34 provides an illumination beam, which is collimated by collimator lens 36 and then illuminates a length of the flow path. The envelope of the laser signal defines the length of the flow path which in turn defines a measurement zone. A photon detector 38 such as an avalanche photodiode collects scattered light after focusing by lens 40.

The light for example has a top-hat intensity profile. A lenslet array or a Powell lens may be used to convert a Gaussian laser output into incident light with a uniform intensity.

The photon detector signal is provided to a controller 41, which also controls the laser source 34 and the fan 33. The controller outputs the effective optical diameter $d_{op}$ the effective aerodynamic diameter $d_{ae}$ and the further parameters of a shape factor $\chi$ and a density $\rho_p$.

It may also output an identification of the particle type by mapping the particle characteristics to known pollutants using a database.

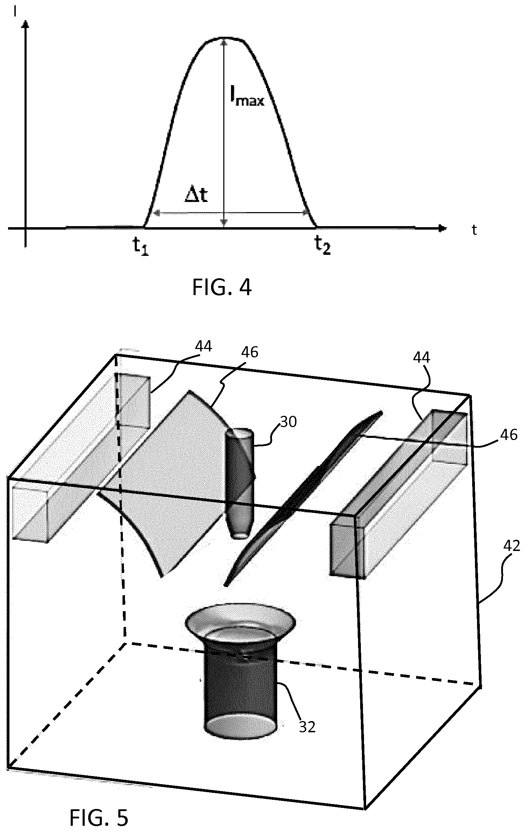

Figure 4 shows an example of a signal recorded by the photon detector 38 over time. The pulse relates to the transit of a single particle. It has a maximum intensity $I_{max}$ and a time duration $\Delta t$ between times $t_1$ and $t_2$. The measurement zone corresponds to the position of the particle between times $t_1$ and $t_2$.

The light is collected at a pre-defined angle. The light intensity signal of Figure 4 is converted to digital form using an analog to digital converter and recorded as a time series, within the controller 41.

Due to the constraints of laser power and analog to digital conversion resolution and signal to noise ratio, a low angle 0 between the incident laser light and particle beam is used so that the laser power is concentrated into a small area but a sufficient length of illumination of the measurement zone is enabled. This is explained further below. The use of an avalanche photon detector enables an increase in the sensitivity of the scattered light intensity measurement.

The width of the pulse $\Delta t$ in Figure 4, i.e. the transit time, relates to the velocity of the particle in the laser beam, which is determined by the aerodynamic diameter of the particle, while the height of the signal $I_{max}$ represents the light intensity that is scattered off the particle, which is proportional to the effective optical diameter of the particle.

Thus, the single optical measurement provides multiple sources of information concerning the particle characteristics. In particular, by analyzing the two effective diameters, the particle density, shape factor and optionally particle type can be determined.

Figure 5 shows the flow control apparatus.

It shows the inlet 30 and outlet 32 of Figure 3. The inlet is at atmospheric pressure, and the outlet is connected to the fan, such as a centrifugal fan (with a higher static pressure at low flow rate compared to a coaxial fan). The inlet and outlet pass into an enclosure 42, and filters 44 are provided within the enclosure, in particular on opposite sides of the flow channel.

The filters 44 are open to the exterior, so that they present a flow path from the outside to the inside of the enclosure 42. Thus, the flow out of the enclosure 42 is balanced by the flow in through the two filters and the flow through the inlet 30. The flow rate through the inlet 30, and thus the dilution rate of the incoming particle-laden air flow, depends on the characteristics of the filters, e.g. size, thickness, resistance coefficient etc.

Flow deflectors 46 are provided for shaping the flow streamlines to focus the particle trajectory from the inlet.

The design of the aerodynamic flow control apparatus part aims to generate a steady state accelerating flow field inside the measurement zone.

Particles with different aerodynamic diameter accelerate to different extent in an accelerating flow. This property is thus used to perform particle sizing with respect to aerodynamic diameter. Using a uniform flow field cannot achieve this goal, as all particles will settle to a same velocity profile in the measurement zone, and thus the same transit time.

The filters create a clean environment in the measurement zone to eliminate contamination by unwanted particles during light scattering measurements. This is especially helpful at each start-up of the system after it has been idle for a long time. They also dilute the incoming particle-laden air flow to ensure that, during any time, only one particle is present in the measurement zone (i.e. within the laser beam path). The dilution rate can be adjusted by changing the flow resistance (i.e. the material or thickness) of the filtration material.

The negative pressure induced by the fan 33 is set for example down to approximately -50 Pa.

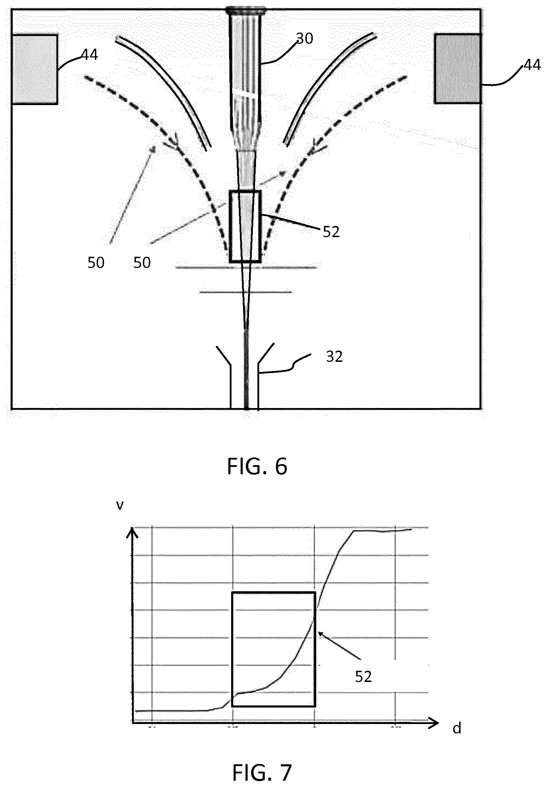

Figure 6 shows how the flow is controlled.

The flow has a reducing cross sectional area from the inlet 30 to the outlet 32, hence an increasing velocity along its axis. The air flow 50 through the filters 44 focuses the particle trajectory, and there is an acceleration towards the outlet 32 within the measurement zone 52 where the measurement takes place.

Figure 7 shows the flow velocity profile in the measurement zone 52, as a plot of velocity versus distance along the flow path.

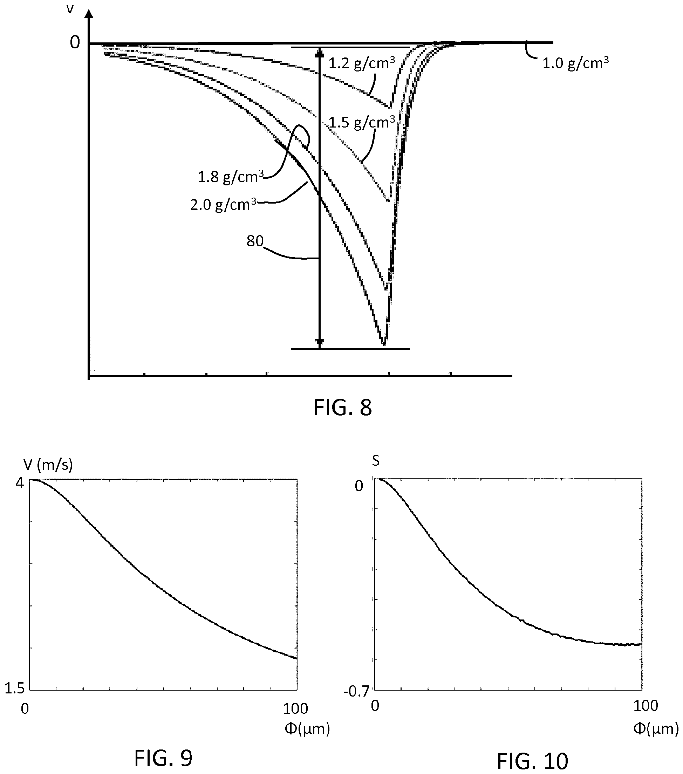

Figure 8 shows the effect of particle density (which correlates to the effective aerodynamic diameter) on the velocity reached within the acceleration zone 52. It shows the relative velocity versus the distance from the inlet nozzle for a set of different particle densities ranging from 1.0g/cm$^3$ to 2.0g/cm$^3$ for particles with identical diameter of 10$\mu$m,

and uses particles of density 1.0g/cm$^3$ as a baseline reference.

From this graph, the velocity difference with respect to the baseline can be determined (such as the vertical arrow 80 shown) at different distances from the inlet nozzle. The reference line (v=0) indicates the reference with particles having density 1 g/cm$^3$, and thus is set to 0 at all distances.

The other plots show the velocity difference for particles with density 1.2, 1.5, 1.8 and 2.0 g/cm$^3$ compared to the baseline reference. Larger particles accelerate more slowly than smaller particles, thus particles with higher density (i.e. larger aerodynamic diameter) have a more negative value as shown by arrow 80 for the most dense particle.

After the accelerating flow field, in the measurement zone, the velocity profile of the flow changes, so that the velocity differences then diminish and all particles settle in the flow field with the same terminal velocity. This is also shown in Figure 8.

As explained above, the total time a particle traverses the measurement zone (i.e. the width of the signal Δt in Figure 4) is used to characterize the aerodynamic diameter of the particle. To estimate the potential accuracy and stability of this algorithm, a sensitivity analysis is performed for the two relationships (i) terminal velocity to particle effective aerodynamic diameter, and (ii) transit time (in the measurement zone) to particle effective aerodynamic diameter.

The sensitivity (x) can be defined as [(dy/y) / (dx/x)] (x) for a relationship y = f(x).

This sensitivity defines the ratio of percentage of change in y and percentage of change in x at different values of x. A high sensitivity means that a change in x will cause a prominent change in y. Thus by measuring y, a more accurate determination of the value of x can be obtained with less interference from noise.

The sensitivity analysis is performed for particles with aerodynamic diameter ranging from 1 μm to 100 μm in steps of 1 μm and a uniform density 1.5 × 10$^3$ kg/m$^3$. The measurement zone length is 4cm.

Figure 9 shows the terminal velocity v (m/s) versus the particle diameter (μm).

Figure 10 shows the sensitivity S (unitless) of the terminal velocity versus the particle diameter (μm).

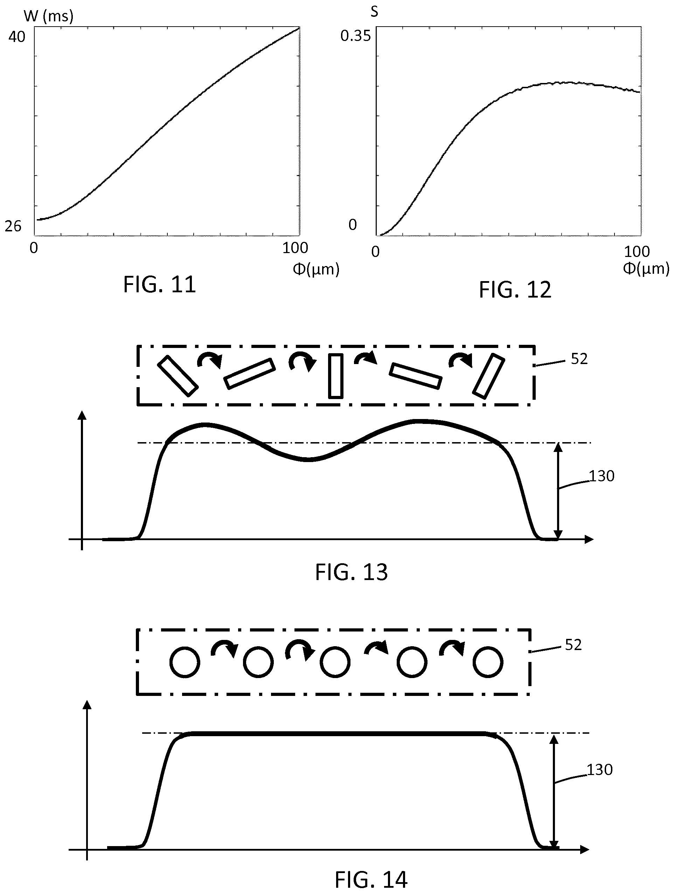

Figure 11 shows the pulse width W (ms) versus the particle diameter (μm).

Figure 12 shows the sensitivity S (unitless) of the pulse width versus the particle diameter (μm).

In Figure 10, the sensitivity of the relationship particle between the terminal velocity and particle effective aerodynamic diameter ranges from 0 to 0.5 (absolute value) with higher sensitivity for larger particles. The same conclusion can be drawn from Figure 12 where the sensitivity of the relationship between particle transit time and particle effective aerodynamic diameter ranges from 0 to 0.25, also with larger particles having higher sensitivity.

This sensitivity analysis shows that the use of particle transit time to characterize particle aerodynamic is feasible and more sensitive (giving a more accurate and stable estimation) for larger particles.

The nature of the movement of the particles in the flow can be analyzed based on the drag force experienced by the particles.

The drag force is given by:

$$F_{drag} = \frac{3\pi\eta V_{set} d_p}{C_c(d_p)} \tag{1}$$

For a particle of interest:

$$\rho_p \frac{\pi}{6} d_{op}{}^3 g = \frac{3\pi\eta V_{Set} d_{op}\chi}{C_c(d_{op})} \tag{2}$$

For a particle with standard density:

$$\rho_0 \frac{\pi}{6} d_{ae}{}^3 g = \frac{3\pi\eta V_{Set} d_{ae}}{C_c(d_{ae})} \tag{3}$$

These two relationships can be combined to yield:

$$d_{ae} = d_{op} \sqrt{\frac{1}{\chi} \frac{\rho_p}{\rho_0} \frac{C_c(d_{op})}{C_c(d_{ae})}}$$

(4)

$\rho_p$ is the particle density

po is the standard density

$\eta$ is the dynamic viscosity of air = 1.893 x 10$^{-5}$ Pa·s

$\chi$ is the dynamic shape factor (1 for a sphere, <1 for streamlined shape, >1 for most aerosol particles)

$V_{set}$ is the settling velocity (the relative velocity of the particle with respect to the carrier flow)

$C_c(d_p)$ is slip correction factor, which has a known relationship with respect to $d_p$ and can be approximated to 1 for particles larger than 1 micrometer

$d_{op}$ is the effective optical diameter

$d_{ae}$ is the effective aerodynamic diameter

$d_p$ is the generic particle diameter value used in the generic drag equation.

There are different options for processing the recorded data.

In a most basic version, which is not part of the present invention, the height and width of the scattered signal of Figure 4 are measured, where the height of the signal is related to particle effective optical diameter, and the width of the signal (the transit time of the particle in the laser beam) is related to the effective particle aerodynamic diameter by the relationship shown in Figure 10.

After obtaining the effective optical and aerodynamic diameters, the value under the root sign of Equation (4) can be derived for a specific particle.

In addition, as $Cc(d_{ae})$ and $Cc(d_{op})$ have known relationship with dependent variable d (i.e. $d_{ae}$ and $d_{op}$) and are close to one for micron-sized particles, the ratio of density ($\rho_p$) and shape factor ($\chi$) can be calculated as a single number.

This most basic approach provides one additional parameter which combines density and shape factor. This may be used to provide particle differentiation in that different particles will have different values for this parameter.

In this basic version, the measured variables are the effective optical diameter (derived from peak intensity) and the effective aerodynamic diameter (derived from the transit time). These are outputs from the system.

Known variables are $\rho_0$ = 1g/cm$^3$, $Cc(d_{op}) \approx 1$, $Cc(d_{ae}) \approx 1$.

The calculated additional variable is the ratio of particle density ($\rho_p$) to shape factor ($\chi$). This is also provided as an output. The system can also output particle number concentration.

It would be more useful to be able to separate the particle density and shape information. Thus, in a more advance implementation, a particle shape factor may be obtained by analyzing a variation of the scattered light signal collected by the photon detector.

Figures 13 and 14 are used to explain a first approach.

Figure 13 shows a collected signal for a non-spherical particle. The orientation of the particle influences the scattered light intensity in the direction of the photon detector, and this manifests itself as a variation in the intensity level during the period of the signal corresponding to the central area of the measurement zone.

Figure 14 shows a collected signal for a spherical particle. The orientation of the particle does not influence the scattered light intensity in the direction of the photon detector, so the peak intensity has a period of constant amplitude. In each case, the peak intensity 120 recorded for the purposes of determining the effective optical diameter is the same.

A shape factor $\chi$ can then be evaluated and hence the particle density can be separated from the shape factor. The deviation of the signal of Figure 13 from a constant peak value maybe obtained by any suitable statistical analysis, such as the peak deviation from the baseline level (shown dotted) or an area of deviation.

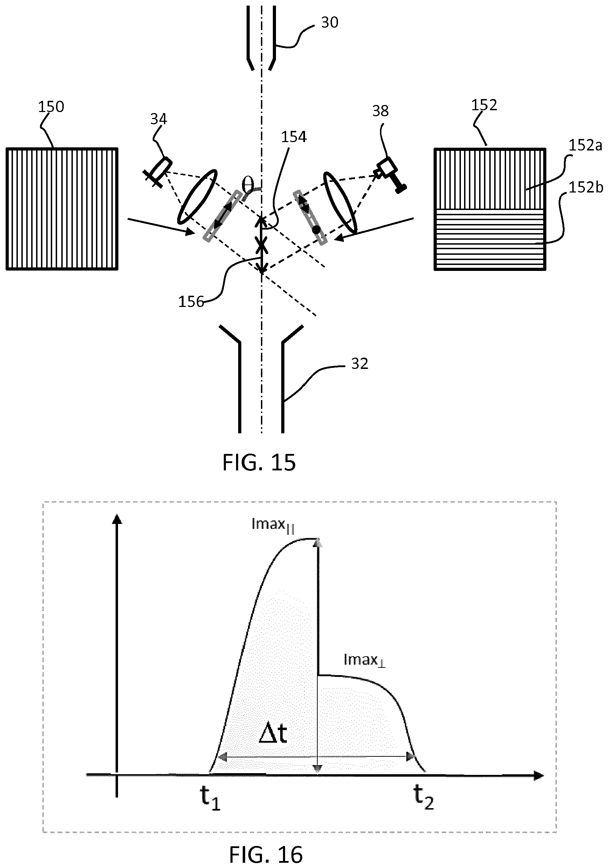

Figure 15 is used to explain a second approach.

The optical system is enhanced by providing a first polarizer 150 in the path of the laser beam, before the measurement zone, and a second polarizer 152 is provided in the path to the photon detector 38.

The second polarizer has two portions 152a, 152b with orthogonal polarization. The first part 154 of the path of the particle within the measurement zone is detected based on light which has passed through the first portion 152a, and the second part 156 of the path of the particle is detected based on light which has passed through the second portion 152b. In this example, the first portion has a polarization aligned with the first polarizer, and the second portion has a polarization orthogonal to the first polarizer.

Figure 16 shows an example of the collected light intensity for a non-spherical particle.

During a first part of the time period a light intensity is measured for light that has passed though aligned polarizers, with a maximum intensity shown as $I_{max}||$. During a second part of the time period a light intensity is measured for light that has passed though crossed polarizers, with a maximum intensity shown as $I_{max}\perp$. In this case, only light that has undergone a polarization rotation between the polarizers can be collected.

For spherical particles, the scattered light will maintain its original polarization along each of the two orthogonal directions. For non-spherical particles, a portion of the scattered light will experience a change in polarization, hence yields a cross contribution of polarized components between the two orthogonal directions.

The two polarized components of the scattering field depend on the S-matrix

$$\begin{pmatrix} E_{||s} \\ E_{\perp s} \end{pmatrix} = \frac{e^{ik(r-z)}}{-ikr} \begin{bmatrix} S_2 & S_3 \\ S_4 & S_1 \end{bmatrix} \cdot \begin{pmatrix} E_{||i} \\ E_{\perp i} \end{pmatrix}$$

For spherical particles, $S_3 = S_4 = 0$, so that the two polarization components in the incident and scattered light will not interact. For non-spherical particles, $S3 = S4 \neq 0$, the two polarization components will interact, i.e. the parallel component in the incident light will contribute to both parallel and perpendicular components in scattered light.

A shape measure maybe defined as:

$$P \equiv \frac{Imax_{||} - Imax_{\perp}}{Imax_{||} + Imax_{\perp}} = f(\chi)$$

For spherical particles, $I_{max\perp} = 0 \Rightarrow P = 1$. For non-spherical particles, $Imax_{\perp} > 0 \Rightarrow P < 1$.

Thus, the parameter P provides a measure of the shape of a particle from which an estimate is obtained for shape factor $\chi$ and hence the particle density can be separated from the shape factor.

In this approach, the measured variables are the effective optical diameter (based on the peak intensity), the effective aerodynamic diameter (based on the transit time) and the shape factor ($\chi$) (based on the shape of the intensity plot). These are outputs by the system.

The known variables are again $\rho_0 = 1$ g/cm$^3$, $Cc(d_{op}) \approx 1$, $Cc(d_{ae}) \approx 1$.

The calculated variable is the particle density ($\rho_p$) which is also output from the system, again also with a particle count.

The retrieval of the effective aerodynamic diameter as well as the shape factor using either of these approaches requires a wide incident laser beam (of the order of millimeters or centimeters) compared to a typical narrow laser beam (of the order of micrometers).

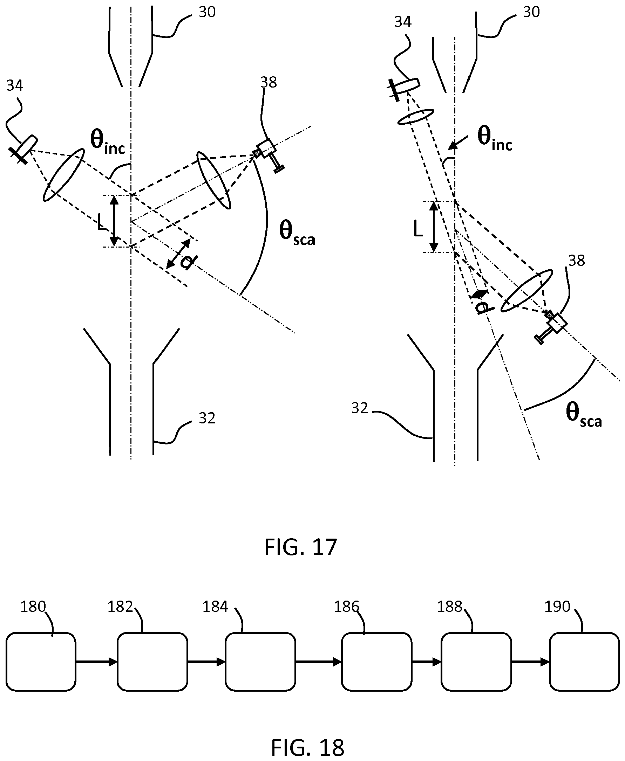

The left part of Figure 17 shows parameters associated with the optical arrangement of Figure 3, in particular the laser beam width d and the path length L in the measurement zone. The angle between the incident beam and the flow path is shown as $\theta_{inc}$. The scattering angle between the incident beam and the photon detector is shown as $\theta_{sca}$.

The right part of Figure 17 shows the effect of decreasing the angle of incidence.

For a given path length L and laser power, and beam width d can be decreased, so that the irradiance can be increased giving a higher signal to noise ratio.

The scattering angle $\theta_{sca}$ can also be decreased to increase the scattering intensity reaching the photon detector, as there is more forward scattering for particles with size larger than 0.5μm.

By way of example, preferred ranges for $\theta_{inc}$ are 15 to 25° such as 20°. Preferred ranges for $\theta_{sca}$ are 20 to 40° such as 30°. The length L has the order of centimeters, such as 1cm to 6cm, such as 2cm. A suitable range for d is L/3 to L/4.

The system will be calibrated with respect to:

The signal height to effective optical diameter relationship;
The signal width to effective aerodynamic diameter relationship;
The signal variation to shape factor relationship (when used); and
The parameter P to shape factor relationship (when used).

Figure 18 shows a method for obtaining particle characteristics, comprising:

in step 180, generating an accelerating flow containing particles between an inlet and an outlet;
in step 182, controlling a laser light source to provide light to a measurement zone of the flow path;
in step 184, detecting light received from the measurement zone which has been scattered by the particles;
in step 186, determining a time duration for which a particle remains in the measurement zone and thereby determining an effective aerodynamic particle diameter;

in step 188, determining a peak detected received light intensity and thereby determining an effective optical particle diameter; and

in step 190, determining a first and a second further particle parameter relating to the shape and density of the particle respectively.

As discussed above, embodiments make use of a controller 41. The controller can be implemented in numerous ways, with software and/or hardware, to perform the various functions required. A processor is one example of a controller which employs one or more microprocessors that maybe programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

The invention makes use of a wide light source illumination beam and enables effective aerodynamic diameter, effective optical diameter and shape factor all to be achieved in one shot. With this design, the sensor can be made with a small footprint and reasonable sensitivity (compared to a professional mass spectrometry system).

The examples above show a measurement zone with continuous illumination. An alternative, which is not part of the present invention, is to splitting a beam into two to define an envelope with two portions. The length of the measurement zone can then be increased in return for a higher sensitivity for aerodynamic diameter measurement, while retaining the shape determination function. For example a 4cm beam may be split into a 2cm laser + 2cm void + 2cm laser envelope with a measurement zone length of 6cm.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

**Claims**

1. An apparatus for determining particle characteristics, comprising:

an inlet (30) and an outlet (32);
a flow system (33) for generating a flow path between the inlet (30) and the outlet (32) along which an accelerating flow is to be provided containing particles to be analyzed, wherein the apparatus is adapted to provide said accelerating flow along the flow path;
a light source (34) for providing light to the flow path, wherein the envelope of the light defines a measurement zone of the flow path with continuous illumination, the measurement zone having a path length of more than 1cm;
a light detector (38) for detecting light received from the measurement zone which has been scattered by the particles; and
a controller (41) for analyzing the detected received light,
wherein the controller is adapted, for a particle of the particles, to:

determine a time duration for which the particle remains in the measurement zone based on a width of a detected received light intensity pulse relating to the transit of the particle through the measurement zone, and thereby determine an effective aerodynamic particle diameter of the particle;
determine a peak detected received light intensity and thereby determine an effective optical particle diameter of the particle;
analyze a level of variation of the detected received intensity over time and thereby derive a particle shape parameter of the particle as a first further particle parameter; and
determine a particle density of the particle from the effective aerodynamic particle diameter, the effective optical particle diameter and the particle shape parameter, as a second further particle parameter.

2. An apparatus for determining particle characteristics, comprising:

> an inlet (30) and an outlet (32);
> a flow system (33) for generating a flow path between the inlet (30) and the outlet (32) along which an accelerating flow is to be provided containing particles to be analyzed, wherein the apparatus is adapted to provide said accelerating flow along the flow path;
> a light source (34) for providing light to the flow path, wherein the envelope of the light defines a measurement zone of the flow path with continuous illumination, the measurement zone having a path length of more than 1cm;
> a light detector (38) for detecting light received from the measurement zone which has been scattered by the particles;
> a first polarizer (150) between the light source and the measurement zone;
> a second polarizer (152) between the measurement zone and the light detector, wherein the second polarizer has a first portion (152a) with a matching polarization to the first polarizer and a second portion (152b) with an orthogonal polarization to the first polarizer; and
> a controller (41) for analyzing the detected received light,
> wherein the controller is adapted, for a particle of the particles, to:
>
>> determine a time duration for which the particle remains in the measurement zone based on a width of a detected received light intensity pulse relating to the transit of the particle through the measurement zone, and thereby determine an effective aerodynamic particle diameter of the particle;
>> determine a peak detected received light intensity and thereby determine an effective optical particle diameter of the particle;
>> analyze the peak detected received light intensity through each of the first and second portions of the second polarizer and thereby derive a particle shape parameter of the particle as a first further particle parameter; and
>> determine a particle density of the particle from the effective aerodynamic particle diameter, the effective optical particle diameter and the particle shape parameter, as a second further particle parameter.

3. An apparatus as claimed in claim 1 or 2, wherein the flow system comprises a fan (33) connected to the outlet, and wherein the apparatus further comprises:

> an outer enclosure (42);
> a filter arrangement (44) coupled to a further pair of inlets; and
> a flow deflector arrangement (46) for controlling the flow from the filter arrangement and for controlling the flow path.

4. An apparatus as claimed in claim 3, wherein the filter arrangement (44) comprises first and second filters on opposite sides of the flow path, and the flow deflector arrangement comprises corresponding first and second flow deflectors (46).

5. An apparatus as claimed in any preceding claim, adapted to provide a uniform acceleration of the flow along the flow path within the measurement zone.

6. A method for obtaining particle characteristics, comprising:

> (180) generating an accelerating flow containing particles along a flow path between an inlet and an outlet;
> (182) controlling a light source to provide light to the flow path, wherein the envelope of the light defines a measurement zone of the flow path with continuous illumination, the measurement zone having a path length of more than 1cm;
> (184) detecting light received from the measurement zone which has been scattered by the particles;
> (186) determining a time duration for which a particle remains in the measurement zone based on a width of a detected received light intensity pulse relating to the transit of the particle through the measurement zone and thereby determining an effective aerodynamic particle diameter of the particle;
> (188) determining a peak detected received light intensity and thereby determining an effective optical particle diameter of the particle;
> analyzing a level of variation of the detected received intensity over time and thereby deriving a particle shape parameter of the particle as a first further particle parameter; and
> determining a particle density of the particle from the effective aerodynamic particle diameter, the effective optical particle diameter and the particle shape parameter, as a second further particle parameter.

7. A method for obtaining particle characteristics, comprising:

(180) generating an accelerating flow containing particles along a flow path between an inlet and an outlet;
(182) controlling a light source to provide light to the flow path, wherein the envelope of the light defines a measurement zone of the flow path with continuous illumination, the measurement zone having a path length of more than 1cm;
providing polarization of the light between before the measurement zone using a first polarizer;
providing polarization of the light after the measurement zone using a second polarizer having a first portion with a matching polarization to the first polarizer and a second portion with an orthogonal polarization to the first polarizer;
(184) detecting light received from the measurement zone which has been scattered by the particles;
(186) determining a time duration for which a particle remains in the measurement zone based on a width of a detected received light intensity pulse relating to the transit of the particle through the measurement zone and thereby determining an effective aerodynamic particle diameter of the particle;
(188) determining a peak detected received light intensity and thereby determining an effective optical particle diameter of the particle;
analyzing the peak detected received light intensity through each of the first and second portions of the second polarizer to derive a particle shape parameter as a first further particle parameter; and
determining a particle density of the particle from the effective aerodynamic particle diameter, the effective optical particle diameter and the particle shape parameter, as a second further particle parameter.

8. A method as claimed in claim 6 or 7, comprising providing a filtered air flow towards the measurement zone thereby to control the flow path.

9. A method as claimed in claim 6 or 7, comprising providing a uniform acceleration of the flow along the flow path within the measurement zone.

10. A computer program comprising computer program code means which is adapted to cause the device of claim 1 to execute the method of claim 6.

11. A computer program comprising computer program code means which is adapted to cause the device of claim 2 to execute the method of claim 7.

**Patentansprüche**

1. Apparat zur Bestimmung von Partikeleigenschaften, welcher Folgendes umfasst:

einen Einlass (30) und einen Auslass (32); ein Strömungssystem (33) zum Erzeugen eines Strömungsweges zwischen dem Einlass (30) und dem Auslass (32), entlang dessen ein beschleunigender Strom bereitgestellt werden soll, der zu analysierende Partikel enthält, wobei die Vorrichtung angepasst ist, um den beschleunigenden Strom entlang des Strömungsweges bereitzustellen; eine Lichtquelle (34) zum Bereitstellen von Licht für den Strömungsweg, wobei die Umgebung des Lichts eine Messzone des Strömungswegs mit kontinuierlicher Beleuchtung definiert, wobei die Messzone eine Weglänge von mehr als 1 cm aufweist; einen Lichtdetektor (38) zum Erfassen des von der Messzone empfangenen Lichts, das von den Partikeln gestreut wurde; und eine Steuereinheit (41) zum Analysieren des erfassten empfangenen Lichts, wobei die Steuereinheit angepasst ist, um für einen der Partikel: eine Zeitdauer zu bestimmen, für die in der Messzone verbleibenden Partikel, basierend auf einer Breite eines detektierten empfangenen Lichtintensitätsimpulses, der sich auf den Durchgang des Partikels durch die Messzone bezieht, und dadurch einen effektiven aerodynamischen Partikeldurchmesser des Partikels zu bestimmen; einen Spitzenwert der detektierten empfangenen Lichtintensität zu bestimmen und dadurch einen effektiven optischen Partikeldurchmesser des Partikels zu bestimmen; ein Niveau der Variation der detektierten empfangenen Intensität über die Zeit zu analysieren und dadurch einen Partikelformparameter des Partikels als einen ersten weiteren Partikelparameter abzuleiten; und
eine Partikeldichte des Partikels aus dem effektiven aerodynamischen Partikeldurchmesser, dem effektiven optischen Partikeldurchmesser und dem Partikelformparameter als einen zweiten weiteren Partikelparameter zu bestimmen.

2. Apparat zur Bestimmung von Partikeleigenschaften, welcher Folgendes umfasst: einen Einlass (30) und einen Auslass (32); ein Strömungssystem (33) zur Erzeugung eines Strömungsweges zwischen dem Einlass (30) und dem Auslass (32), entlang dessen eine beschleunigende Strömung bereitgestellt werden soll, die zu analysierende Partikel enthält, wobei der Apparat so angepasst ist, dass er die genannte beschleunigende Strömung

entlang des Strömungsweges bereitstellt; eine Lichtquelle (34) zum Bereitstellen von Licht für den Strömungsweg, wobei die Umgebung des Lichtes eine Messzone des Strömungsweges mit kontinuierlicher Beleuchtung definiert, wobei die Messzone eine Weglänge von mehr als 1 cm aufweist; einen Lichtdetektor (38) zum Erfassen von Licht, das von der Messzone empfangen wird und von den Partikeln gestreut wurde; einen ersten Polarisator (150) zwischen der Lichtquelle und der Messzone; einen zweiten Polarisator (152) zwischen der Messzone und dem Lichtdetektor, wobei der zweite Polarisator einen ersten Teil (152a) mit einer an den ersten Polarisator angepassten Polarisation und einen zweiten Teil (152b) mit einer orthogonalen Polarisation zum ersten Polarisator aufweist; und
ein Steuergerät (41) zum Analysieren des detektierten empfangenen Lichts, wobei das Steuergerät für einen der Partikel angepasst ist, um: eine Zeitdauer zu bestimmen, für die der Partikel in der Messzone verbleibt, basierend auf einer Breite eines detektierten empfangenen Lichtintensitätsimpulses, der sich auf den Durchgang des Partikels durch die Messzone bezieht, und dadurch einen effektiven aerodynamischen Partikeldurchmesser des Partikels zu bestimmen; eine Spitze der detektierten empfangenen Lichtintensität zu bestimmen und dadurch einen effektiven optischen Partikeldurchmesser des Partikels zu bestimmen; Analysieren des Spitzenwertes der detektierten empfangenen Lichtintensität durch jeden der ersten und zweiten Abschnitte des zweiten Polarisators und dadurch Ableiten eines Partikelformparameters des Partikels als einen ersten weiteren Partikelparameter; und Bestimmen einer Partikeldichte des Partikels aus dem effektiven aerodynamischen Partikeldurchmesser, dem effektiven optischen Partikeldurchmesser und dem Partikelformparameter als einen zweiten weiteren Partikelparameter.

3. Apparat nach Anspruch 1 oder 2, wobei das Strömungssystem ein mit dem Auslass verbundenes Gebläse (33) umfasst, und wobei der Apparat des Weiteren Folgendes umfasst: ein äußeres Gehäuse (42);
eine Filteranordnung (44), die mit einem weiteren Paar von Einlässen verbunden ist; und eine Strömungsumlenkungsanordnung (46) zur Steuerung der Strömung von der Filteranordnung und zur Steuerung des Strömungswegs.

4. Apparat nach Anspruch 3, wobei die Filteranordnung (44) einen ersten und einen zweiten Filter auf gegenüberliegenden Seiten des Strömungsweges umfasst und die Strömungsablenkungsanordnung entsprechende erste und zweite Strömungsablenkungen (46) umfasst.

5. Apparat nach einem der vorhergehenden Ansprüche, der so beschaffen ist, dass er eine gleichmäßige Beschleunigung der Strömung entlang des Strömungsweges innerhalb der Messzone bewirkt.

6. Verfahren zur Gewinnung von Partikeleigenschaften, das Folgendes umfasst: (180) Erzeugen einer beschleunigenden Strömung, die Partikel entlang eines Strömungsweges zwischen einem Einlass und einem Auslass enthält; (182) Steuern einer Lichtquelle, um den Strömungsweg mit Licht zu versorgen, wobei die Umgebung des Lichts eine Messzone des Strömungsweges mit kontinuierlicher Beleuchtung definiert, wobei die Messzone eine Weglänge von mehr als 1 cm aufweist; (184) Erfassen von Licht, das von der Messzone empfangen wird und von den Partikeln gestreut wurde; (186) Bestimmen einer Zeitdauer, für die ein Partikel in der Messzone verbleibt, basierend auf einer Breite eines detektierten empfangenen Lichtintensitätsimpulses, der sich auf den Durchgang des Partikels durch die Messzone bezieht, und dadurch Bestimmen eines effektiven aerodynamischen Partikeldurchmessers des Partikels; (188) Bestimmen einer Spitze der detektierten empfangenen Lichtintensität und dadurch Bestimmen eines effektiven optischen Partikeldurchmessers des Partikels; Analysieren eines Niveaus der Variation der detektierten empfangenen Intensität über die Zeit und dadurch Ableiten eines Partikelformparameters des Partikels als einen ersten weiteren Partikelparameter; Und Bestimmen einer Partikeldichte des Partikels aus dem effektiven aerodynamischen Partikeldurchmesser, dem effektiven optischen Partikeldurchmesser und dem Partikelformparameter als einem zweiten weiteren Partikelparameter.

7. Verfahren zur Gewinnung von Partikeleigenschaften, das Folgendes umfasst: (180) Erzeugen einer beschleunigenden Strömung, die Partikel entlang eines Strömungsweges zwischen einem Einlass und einem Auslass enthält; (182) Steuern einer Lichtquelle, um den Strömungsweg mit Licht zu versorgen, wobei die Umgebung des Lichtes eine Messzone des Strömungsweges mit kontinuierlicher Beleuchtung definiert, wobei die Messzone eine Weglänge von mehr als 1 cm hat; Polarisierung des Lichts zwischen vor der Messzone unter Verwendung

eines ersten Polarisators;

Bereitstellen einer Polarisation des Lichts nach der Messzone unter Verwendung eines zweiten Polarisators, der einen ersten Teil mit einer an den ersten Polarisator angepassten Polarisation und einen zweiten Teil mit einer zum ersten Polarisator orthogonalen Polarisation aufweist; (184) Erfassen des von der Messzone empfangenen Lichts, das von den Partikeln gestreut wurde; (186) Bestimmen einer Zeitdauer, für die ein Partikel in der Messzone verbleibt, auf der Grundlage einer Breite eines erfassten empfangenen Lichtintensitätsimpulses, der sich auf den Durchgang des Partikels durch die Messzone bezieht, und dadurch Bestimmen eines effektiven aerodynamischen Partikeldurchmessers des Partikels; (188) Bestimmen eines Spitzenwerts der detektierten empfangenen Lichtintensität und dadurch Bestimmen eines effektiven optischen Partikeldurchmessers des Partikels; Analysieren des Spitzenwerts der detektierten empfangenen Lichtintensität durch jeden der ersten und zweiten Teile des zweiten Polarisators, um einen Partikelformparameter als einen ersten weiteren Partikelparameter abzuleiten; und

Bestimmen einer Partikeldichte des Partikels aus dem effektiven aerodynamischen Partikeldurchmesser, dem effektiven optischen Partikeldurchmesser und dem Partikelformparameter als einem zweiten weiteren Partikelparameter.

**8.** Verfahren nach Anspruch 6 oder 7, bei dem ein gefilterter Luftstrom in Richtung der Messzone bereitgestellt wird, um dadurch den Strömungsweg zu steuern.

**9.** Verfahren nach Anspruch 6 oder 7, bei dem eine gleichmäßige Beschleunigung der Strömung entlang des Strömungsweges innerhalb der Messzone vorgesehen ist.

**10.** Computerprogramm mit einer Computerprogrammcodeeinrichtung, die geeignet ist, das Gerät nach Anspruch 1 zur Ausführung des Verfahrens nach Anspruch 6 zu veranlassen.

**11.** Computerprogramm mit einer Computerprogrammcodeeinrichtung, die geeignet ist, das Gerät nach Anspruch 2 zur Ausführung des Verfahrens nach Anspruch 7 zu veranlassen.

## Revendications

**1.** Appareil pour déterminer les caractéristiques des particules, comprenant:

une entrée (30) et une sortie (32);

un système d'écoulement (33) pour générer un trajet d'écoulement entre l'entrée (30) et la sortie (32) le long duquel un écoulement accéléré doit être fourni contenant des particules à analyser, dans lequel l'appareil est adapté pour fournir ledit écoulement accéléré le long du trajet d'écoulement;

une source de lumière (34) pour fournir de la lumière au trajet d'écoulement, dans laquelle l'enveloppe de la lumière définit une zone de mesure du trajet d'écoulement avec un éclairage continu, la zone de mesure ayant une longueur de trajet de plus de 1 cm;

un détecteur de lumière (38) pour détecter la lumière reçue de la zone de mesure qui a été diffusée par les particules; et

un contrôleur (41) pour analyser la lumière reçue détectée,

dans lequel le contrôleur est adapté, pour une particule des particules, pour:

déterminer une durée pendant laquelle la particule reste dans la zone de mesure sur la base d'une largeur d'une impulsion d'intensité lumineuse reçue détectée relative au transit de la particule à travers la zone de mesure, et déterminer ainsi un diamètre aérodynamique effectif de la particule;

déterminer un pic d'intensité lumineuse reçue détectée et déterminer ainsi un diamètre optique effectif de particule de la particule;

analyser un niveau de variation de l'intensité reçue détectée au cours du temps et dériver ainsi un paramètre de forme de particule de la particule comme premier paramètre de particule supplémentaire; et

déterminer une densité de particule de la particule à partir du diamètre aérodynamique effectif de la particule, du diamètre optique effectif de la particule et du paramètre de forme de la particule, en tant que deuxième paramètre supplémentaire de la particule.

**2.** Appareil pour déterminer les caractéristiques des particules, comprenant:

une entrée (30) et une sortie (32);

un système d'écoulement (33) pour générer un trajet d'écoulement entre l'entrée (30) et la sortie (32) le long duquel un écoulement accéléré doit être fourni contenant des particules à analyser, dans lequel l'appareil est adapté pour fournir ledit écoulement accéléré le long du trajet d'écoulement;

une source de lumière (34) pour fournir de la lumière au trajet d'écoulement, dans laquelle l'enveloppe de la lumière définit une zone de mesure du trajet d'écoulement avec un éclairage continu, la zone de mesure ayant une longueur de trajet de plus de 1 cm;

un détecteur de lumière (38) pour détecter la lumière reçue de la zone de mesure qui a été diffusée par les particules;

un premier polariseur (150) entre la source de lumière et la zone de mesure;

un deuxième polariseur (152) entre la zone de mesure et le détecteur de lumière, dans lequel le deuxième polariseur a une première partie (152a) avec une polarisation adaptée au premier polariseur et une deuxième partie (152b) avec une polarisation orthogonale au premier polariseur; et

un contrôleur (41) pour analyser la lumière reçue détectée,

dans lequel le contrôleur est adapté, pour une particule des particules, pour:

déterminer une durée pendant laquelle la particule reste dans la zone de mesure sur la base d'une largeur d'une impulsion d'intensité lumineuse reçue détectée concernant le transit de la particule à travers la zone de mesure, et déterminer ainsi un diamètre aérodynamique effectif de la particule;

déterminer un pic d'intensité lumineuse reçue détectée et ainsi déterminer un diamètre optique effectif de particule de la particule;

analyser le pic d'intensité lumineuse reçue détectée à travers chacune des première et deuxième parties du deuxième polariseur et dériver ainsi un paramètre de forme de particule de la particule comme premier paramètre de particule supplémentaire; et

déterminer une densité de particule de la particule à partir du diamètre aérodynamique effectif de la particule, du diamètre optique effectif de la particule et du paramètre de forme de la particule, en tant que deuxième paramètre supplémentaire de la particule.

3.  Appareil selon la revendication 1 ou 2, dans lequel le système d'écoulement comprend un ventilateur (33) relié à la sortie, et dans lequel l'appareil comprend en outre:

une enceinte extérieure (42);

un agencement de filtre (44) couplé à une autre paire d'entrées; et

un agencement de déflecteur d'écoulement (46) pour contrôler l'écoulement provenant de l'agencement de filtre et pour contrôler le trajet d'écoulement.

4.  Appareil selon la revendication 3, dans lequel l'agencement de filtre (44) comprend des premier et deuxième filtres sur des côtés opposés du trajet d'écoulement, et l'agencement de déflecteur d'écoulement comprend des premier et deuxième déflecteurs d'écoulement correspondants (46).

5.  Appareil selon l'une quelconque des revendications précédentes, adapté pour fournir une accélération uniforme de l'écoulement le long du trajet d'écoulement dans la zone de mesure.

6.  Procédé pour obtenir des caractéristiques des particules, comprenant:

(180) la génération d'un flux accéléré contenant des particules le long d'un trajet d'écoulement entre une entrée et une sortie;

(182) commander une source de lumière pour fournir de la lumière au trajet d'écoulement, dans lequel l'enveloppe de la lumière définit une zone de mesure du trajet d'écoulement avec un éclairage continu, la zone de mesure ayant une longueur de trajet de plus de 1 cm;

(184) détecter la lumière reçue de la zone de mesure qui a été dispersée par les particules;

(186) déterminer une durée pendant laquelle une particule reste dans la zone de mesure sur la base d'une largeur d'une impulsion d'intensité lumineuse reçue détecté relative au transit de la particule à travers la zone de mesure et déterminer ainsi un diamètre aérodynamique effectif de la particule;

(188) déterminer un pic d'intensité lumineuse reçue détectée et déterminer ainsi un diamètre de particule optique effectif de la particule; analyser un niveau de variation de l'intensité reçue détecté au cours du temps et dériver ainsi un paramètre de forme de particule de la particule comme premier paramètre de particule supplémentaire; et déterminer une densité de particule de la particule à partir du diamètre aérodynamique effectif de la particule, du diamètre optique effectif de la particule et du paramètre de forme de la particule, en tant que deuxième paramètre supplémentaire de la particule.

7. Procédé pour obtenir des caractéristiques des particules, comprenant: (180) la génération d'un flux accéléré contenant des particules le long d'un trajet d'écoulement entre une entrée et une sortie;

(182) commander une source de lumière pour fournir de la lumière au trajet d'écoulement, dans lequel l'enveloppe de la lumière définit une zone de mesure du trajet d'écoulement avec un éclairage continu, la zone de mesure ayant une longueur de trajet de plus de 1 cm; fournir une polarisation de la lumière avant la zone de mesure en utilisant un premier polariseur;

(184) détecter la lumière reçue de la zone de mesure qui a été diffusée par les particules; (186) déterminer une durée pendant laquelle une particule reste dans la zone de mesure sur la base d'une largeur d'une impulsion d'intensité lumineuse reçue détectée relative au transit de la particule à travers la zone de mesure et déterminer ainsi un diamètre aérodynamique effectif de la particule;

(188) déterminer un pic d'intensité lumineuse reçue détectée et déterminer ainsi un diamètre optique effectif de particule de la particule;

analyser le pic d'intensité lumineuse reçue détectée à travers chacune des première et deuxième parties du deuxième polariseur pour dériver un paramètre de forme de particule en tant que premier paramètre de particule supplémentaire; et

déterminer une densité de particules de la particule à partir du diamètre aérodynamique effectif de la particule, du diamètre optique effectif de la particule et du paramètre de forme de la particule, en tant que deuxième paramètre supplémentaire de la particule.

8. Procédé selon la revendication 6 ou 7, comprenant la fourniture d'un flux d'air filtré vers la zone de mesure afin de contrôler le trajet d'écoulement.

9. Procédé selon la revendication 6 ou 7, comprenant la fourniture d'une accélération uniforme de l'écoulement le long du trajet d'écoulement dans la zone de mesure.

10. Programme d'ordinateur comprenant un moyen de code de programme d'ordinateur qui est adapté pour amener le dispositif de la revendication 1 à exécuter le procédé de la revendication 6.

11. Programme d'ordinateur comprenant un moyen de code de programme d'ordinateur qui est adapté pour amener le dispositif de la revendication 2 à exécuter le procédé de la revendication 7.

**FIG. 1**

**FIG. 2**

**FIG. 3**

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200909249 B
- WO 2016198866 A

**Non-patent literature cited in the description**

- **EBEN S. CROSS.** Laboratory and Ambient Particle Density Determinations using Light Scattering in Conjunction with Aerosol Mass Spectrometry. *Aerosol Science and Technology,* 05 March 2007, vol. 41 (4), 343-359